(19) Europäisches Patentamt
European Patent Office
Office européen des brevets

(11) Publication number: 0 084 943 B2

(12) NEW EUROPEAN PATENT SPECIFICATION

(45) Date of publication of the new patent specification: 02.08.89

(51) Int. Cl.[4]: C 07 C 93/04, C 07 C 91/06 // B01D53/14

(21) Application number: 83300185.2

(22) Date of filling: 14.01.83

(54) **Secondary and tertiary amino alcohols.**

(30) Priority: 18.01.82 US 339881
18.01.82 US 339892
16.09.82 US 418751

(43) Date of publication of application: 03.08.83 Bulletin 83/31

(45) Publication of the grant of the patent: 02.04.86 Bulletin 86/14

(45) Mention of the opposition decision: 02.08.89 Bulletin 89/31

(84) Designated Contracting States: BE DE FR GB IT NL

(56) References cited:
BE-A-889 467
DE-A-2 725 245
FR-A-2 100 475
US-A-3 364 239
US-A-4 238 206

Chimica Organica 1969, pp. 788-789
Chimica Organica 1973, p. 783
Comprehensive Organic Chem., vol. 2, (1979), p. 39

(73) Proprietor: Exxon Research and Engineering Company, P.O.Box 390 180 Park Avenue, Florham Park New Jersey 07932 (US)

(72) Inventor: Stogryn, Eugene Leo, 3 Sharp Road, Edison New Jersey 08817 (US)
Inventor: Sartori, Guido, 25 West Price Street, Linden New Jersey 07036 (US)

(74) Representative: Pitkin, Robert Wilfred, ESSO Engineering (Europe) Ltd. Patents & Licences Apex Tower High Street, New Malden Surrey KT3 4DJ (GB)

EP 0 084 943 B2

LIBER, STOCKHOLM 1989

**Description**

The present invention relates to a class of secondary and tertiary amino alcohols and the processes for their preparation. These compounds are useful, for example, in the removal of hydrogen sulfide from normally gaseous streams, including selective removal from such streams which also contain carbon dioxide.

The specific class of severely sterically hindered secondary and tertiary amino alcohols of the present invention are defined by the general formula:

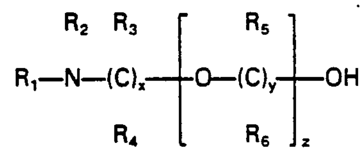

wherein $R_3$ $R_4$ and $R_5$ are each independently hydrogen or alkyl or hydroxyalkyl radicals having 1 to 4 carbon atoms, x end y are each 2, 3 or 4; wherein the secondary amino alcohol is a secondary aminoether alcohol in which $R_1$ has the formula

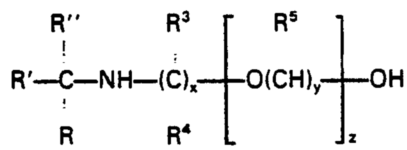

where R and R' are each independently alkyl or hydroxyalkyl radicals having 1 - 4 carbon atoms and R" is hydrogen or an alkyl or hydroxyalkyl radical having 1 to 4 carbon atoms, $R_2$ and $R_6$ are hydrogen, and z is 1, 2, 3 or 4 with the proviso that when R" is hydrogen at least one of $R_3$ and $R_4$ bonded to the carbon atom which is directly bonded to the nitrogen atom is an alkyl or hydroxyalkyl radical having 1 to 4 carbon atoms; and

wherein the tertiary amino alcohol is a tertiary amino alcohol and z is zero, or is a tertiary amino ether alcohol and z is 1 to 4; $R_1$ and $R_2$ are each independently alkyl radicals having 1 to 8 carbon atoms or hydroxyalkyl radicals having 2 to 8 carbon atoms with the proviso that the carbon atoms of $R_1$ and $R_2$ which are attached to the nitrogen atoms cannot both be primary, $R_6$ is hydrogen or an alkyl or hydroxyalkyl radical having 1 to 4 carbon atoms; with the proviso in the tertiary compounds that (i) if the said carbon atom of one of $R_1$ and $R_2$ is secondary and the said carbon atom of the other of $R_1$ and $R_2$ is primary, at least one of $R_3$ and $R_4$ is an alkyl or hydroxyalkyl radical; or (ii) if when z is zero both said carbon atoms of $R_1$ and $R_2$ are secondary then at least one of $R_1$ and $R_2$ is a said $C_2$ - $C_8$ hydroxyalkyl radical.

It is to be understood that no hydroxyalkyl radical has the alkylene group interrupted by oxygen atoms as would be the case if it were derived from the polymerisation of an alkylene oxide.

The severely sterically hindered secondary aminoether alcohols can thus generally be defined by the formula:

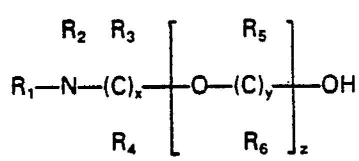

wherein R, R', R'', $R_3$, $R_4$, x, y and z are defined above for the secondary aminoether alcohols, and the severely sterically hindered tertiary amino alcohols can be defined generally by the formula:

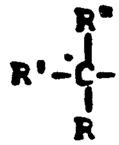

wherein $R_1$, $R_2$, $R_3$, $R_4$, $R_5$, $R_6$, x, y and z are defined above for the tertiary aminoether alcohols. It is noted that the tertiary amino alcohols may be aminoether alcohols but need not be (when z = 0).

These severely sterically hindered secondary and tertiary amino alcohols are found to be particularly useful in the selective absorption of $H_2S$ from normally gaseous mixtures containing $H_2S$ and $CO_2$. (The term "normally" refers to ambient conditions of temperature and pressure). These amino compounds surprisingly

maintain their high selectivity for $H_2S$ over $CO_2$ at high $H_2S$ and $CO_2$ loading levels.

BE 889 467 discloses a process for the selective separation of hydrogen sulphide using as absorptive agent a substantially anhydrous mix of a tertiary amine and an organic solvent. A number of tertiary amines are listed, one of which is isopropyl diethanolamine.

US-A-4 238 206 discloses a process for removing carbon dioxide containing acidic gas from a normally gaseous mixture containing it, using a liquid anhydrous solvent. A number of solvents are listed, including 2-diisopropylaminoethanol and 2-dibutylaminoethanol.

In the drawings:

Fig. 1 is a diagrammatic flow sheet illustrating an experimental sparged absorber unit for use in rapid determination of the selectivity of the amino compound for selective removal of $H_2S$ from gaseous streams containing $H_2S$ and $CO_2$.

Fig. 2 graphically illustrates the selectivity for $H_2S$ plotted against the $H_2S$ and $CO_2$ loading for 3 M solutions of tertiarybutylaminoethoxyethanol (TBEE) as compared to tertiarybutylaminoethanol (TBE) and methyldiethanolamine (MDEA).

Fig. 3 graphically illustrates the selectivity for $H_2S$ plotted against the $H_2S$ and $CO_2$ loading for 3 M solutions of tertiarybutylaminoethoxyethanol (TBEE) as compared to methyldiethanolamine (MDEA), secondarybutylaminoethoxyethanol (SBEE) and isopropylaminoethoxyethanol (IPEE).

Fig. 4 graphically illustrates the selectivity for $H_2S$ plotted against the $H_2S$ and $CO_2$ loading for 3 M solutions of N-methyl-tertiarybutylaminoethoxyethanol (MTBEE) and 2-(N-isopropyl-N-methylamino)propoxyethanol (2-IMPE) as compared to methyldiethanolamine (MDEA).

Fig. 5 graphically illustrates the selectivity for $H_2S$ plotted against the $H_2S$ and $CO_2$ loading for a 1 M solution of N-methyl-N-tertiarybutylaminoethoxyethanol (MTBEE) as compared against a 1.6 M solution of methyldiethanolamine (MDEA).

Fig. 6 graphically illustrates the selectivity for $H_2S$ plotted against the $H_2S$ and $CO_2$ loading for a 3 M solution of N-methyl-N-tertiarybutylaminoethoxyethanol (MTBEE) as compared to N-tertiarybutyldiethanolamine (TBDEA).

Fig. 7 is a diagrammatic flow sheet illustrating an absorption-regenerated unit for selective removal of $H_2S$ from gaseous streams containing $H_2S$ and $CO_2$.

Fig. 8 graphically illustrates the $H_2S$ leak rate plotted against $H_2S$ loading in moles/mole amine for a 1.5 M solution of tertiarybutylaminoethoxyethanol (TBEE) compared against a 3 M solution of methyldiethanolamine (MDEA) using the unit of Fig. 7.

The secondary aminoether alcohols of the invention are preferably characterized by the following general formula:

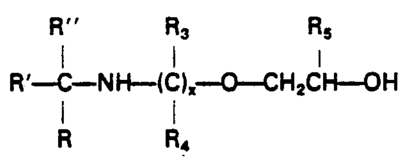

where:

$R = R' = R'' = CH_3$; $R_3 = R_4 = R_5 = H$;

$R = R' = R'' = CH_3$; $R_3 = H$ or $CH_3$; $R_4 = R_5 = H$

$R = R' = R'' = R_5 = CH_3$; $R_3 = R_4 = H$;

$R = R' = R'' = CH_3CH_2$; $R_3 = R_4 = R_5 = H$; or

$R \neq R'' \neq H$; $CH_3$, $CH_3CH_2$, $R_3 \neq R_4 \neq R_5 = H$, $CH_3$, $CH_3CH_2$,

$R = R' \neq R'' = H$, $CH_3$; $R_3 = CH_3$; $R_4 = R_5 = H$ and

$R = R' \neq R'' = CH_3$, $CH_3$, $CH_3CH_2$; $R_3 = R_4 = R_5 = H$

and where $x = 2 - 3$.

Representative secondary amino compounds defined by the general formulae above include:

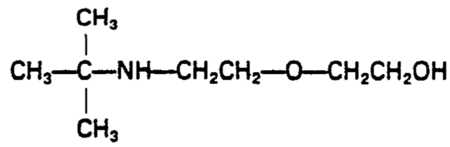

Tertiarybutylaminoethoxyethanol

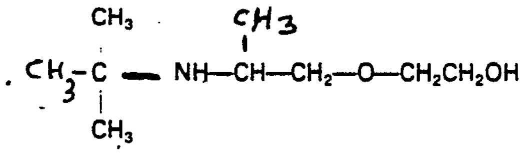

2-(2-tertiarybutylamino)propoxyethanol

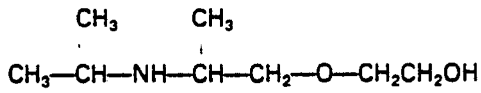

2-(2-isopropylamino)propoxyethanol

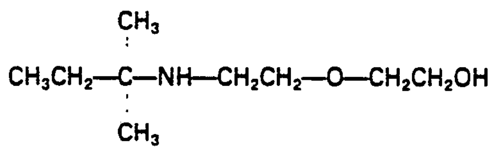

Tertiaryamylaminoethoxyethanol

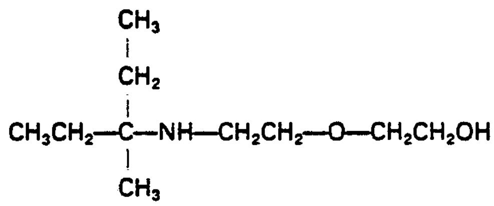

(1-methyl-1-ethylpropylamino)ethoxyethanol

Among these, the preferred secondary aminoether alcohols herein are tertiarybutylaminoethoxyethanol, 2-(2-tertiarybutylamino)propoxyethanol and 2-(2-isopropylamino)propoxyethanol. Most preferred is tertiarybutylaminoethoxyethanol (TBEE).

These novel secondary aminoether alcohols may be prepared by a process comprising reacting, at an elevated temperature, and preferably in the presence of a solvent, a secondary or tertiary alkyl primary amine with an ether alcohol containing a carbonyl functionary in the presence of a source of hydrogen, or with a haloalkoxyalkanol.

Typical secondary or tertiary alkyl primary amines useful in the process for preparing secondary aminoether alcohols include isopropylamine, tertiarybutylamine, 1-methyl-1-ethylpropylamine, and tertiaryamylamine. Typical haloalkoxyalkanols include 2-chloroethoxyethanol and the like. Typical ether alcohols containing a carbonyl functionary (such as a ketone or aldehyde group) include 6-hydroxy-3-oxa-2-hexanone. Typical solvents include lower alkanols, ether alkanols and acyclic and cyclic ethers and the secondary alkyl primary amine reagent. Examples of typical solvents include hydroxy-containing compounds, such as water, methanol, ethanol, propanol, ethylene glycol monomethylether, tetrahydrofuran, isopropylamine, tertiaryburylamine, tertiaryamylamine and the like. Preferably, the solvent is a polar compound. The preferred solvent are ethanol and ethylene glycol monomethylether.

The elevated temperatures which may be employed for the above reaction will depend on the particular type of reaction being carried out and on the particular amine employed and the pressures utilized. For the non-catalytic process wherein the amine is reacted with a haloalkoxyalkanol, the reaction temperatures employed are preferably at least 80°C and more preferably at least 100°C at atmospheric pressure. When elevated pressures are employed, e.g., autogenous pressure in an autoclave,. this reaction is preferably carried out at temperatures of at least about 110°C and preferably less than about 250°C, and more preferably from 125°C to about 200°C. Suitable autogenous pressures range from 3.5 kg/cm$^2$to about 70.3 kg/cm$^2$, more preferably 10.5 to about 28.1 kg/cm$^2$. Such autogenous pressure conditions are particularly preferred in the synthesis of tertiarybutylaminoethoxyethanol.

For the process wherein the amine is reacted with an ether alcohol containing a carbonyl functionality in the presence of a source of hydrogen, the temperatures employed are preferably at least 80°C, more preferably 90

to 120°C. The latter reaction process may be carried out by a catalytic reductive amination in the presence of hydrogen gas, preferably at a pressure of 70.3 to 98.4 kg/cm$^2$. Alternatively, the latter reaction process may be carried out by a non-catalytic reductive amination wherein the hydrogen source is a metal hydride.

In all types of reactions for preparing the secondary aminoether alcohols, the reaction mixture preferably contains a molar excess of the amine, preferably at least a 2 : 1 molar excess.

The tertiary aminoether alcohols of this invention are preferably characterized by the following formula:

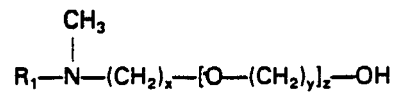

wherein $R_1$ is a tertiary butyl, tertiary amyl or hydroxy tertiary butyl radical, x and y are each 2 - 4 and z is 0 or 1.

Preferred tertiary amino compounds defined by the general formula above include:

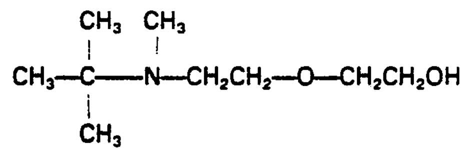

N-methyl-N-tertiarybutylaminoethoxyethanol

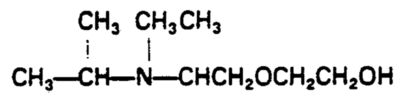

2-(N-isopropyl-N-methylamino)propoxyethanol

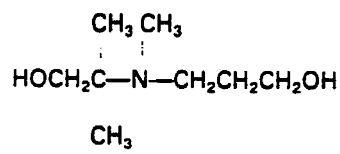

3-aza-2,2,3-trimethyl-1,6-hexanediol

Among these tertiary aminoether alcohols, the most preferred compound is N-methyl-N-tertiarybutylaminoethoxyethanol.

These tertiary amino alcohols may be prepared in a catalytic process by reacting the corresponding severely sterically hindered secondary amino alcohol of the formula:

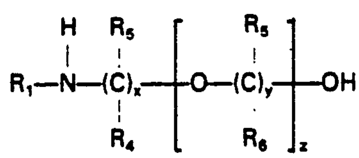

with an aldehyde of the formula $R_2CHO$ wherein $R_1$, $R_2$, $R_3$, $R_4$, $R_5$, $R_6$, x, y and z are defined as defined above in the general formula for tertiary amino alcohols, with the proviso that if the carbon atom of $R_1$ which is directly bonded to the nitrogen atom is secondary and the carbon atom of $R_2$ which is directly bonded to the carbon atom of CHO is primary, at least one of $R_3$ or $R_4$ is an alkyl or hydroxyakyl radical. The reaction takes place at elevated temperatures in the presence of hydrogen gas under hydrogenation conditions or in the presence of an organic and inorganic acid such as formic acid and hydrochloric acid. Hydrogenation conditions may involve temperatures of, e.g., about 60 - 100°C and pressures of up to, e.g., 1000 psi or more and include the presence of a pd/C catalyst and an appropriate solvent for the reaction such as, e.g., methanol. The product is typically recovered by separation of the reaction mixture and distillation of the separated portion.

The amino compounds herein are found to be particularly useful in remowal of $H_2S$ from normally gaseous mixtures containing the same, and are found to be superior to amino compounds used in the past, particularly methyldiethanolamine (MDEA) and diethylmonoethanolamine (DEAE), in terms of both selectivity and capacity for maintaining selectivity over a broad loading range, when used for selective sbsorption of $H_2S$ from mixtures containing $H_2S$ and $CO_2$. Typically, a gaseous stream to be treated having 1 : 10 mole ratio of $H_2S : CO_2$ from an apparatus for thermal conversion of heavy residual oil, or a Lurgi coal gas having a mole ratio of $H_2S : CO_2$ of

less than 1 : 10 will yield an acid gas having a mole ratio of $H_2S$ : $CO_2$ of about 1 : 1 after contacting the stream with an absorbent solution of the amino compound herein under conditions whereby $H_2S$ is selectively absorbed from the stream.

The invention is illustrated further by the following examples, which, however, are not to be taken as limiting in any respect. All parts and percentages, unless expressly stated to be otherwise, are by weight. All $pK_a$ values were measured at 20°C. Summation $-E_s$ is the Taft's steric hindrance constant measuring the degree of steric hindrance of the secondary aminoether alcohols as calculated from the values given for primary amines in Table V from the article by D. F. DeTar, Journal of Organic Chemistry, 45, 5174 (1980). It has been found that for use in selective $H_2S$ removal the secondary aminoether alcohols generally have a summation $-E_s$ value greater than 1.75.

**Example 1**

Preparation of tertiarybutylaminoethoxyethanol (TBEE)

A total of 736 g of tertiarybutylamine and 500 g of 2-chloroethoxyethanol was placed in 2 liters of ethanol and heated at 60°C overnight. The temperature was then gradually raised to 80°C and held for 5 days. The reaction mixture was cooled to 50°C and then treated with 247 g of KOH. After 1 hour at refluxing the reaction mixture was cooled, filtered, vacuum stripped and distilled. A total of 491 g of the distilled product, which calculates as a 75.6 % yield, was obtained having a boiling point (b.p.) of 117°C at 10 mm. Analysis calculated for $C_8H_{19}NO_2$ : %C 59.63; %H, 11.80, %N, 8.70; found: %C, 58.99, %H, 11.82; %N, 8.38.

**Example 2**

Preparation of tertiarybutylaminoethoxyethanol (TBEE) at higher temperatures

A solution of 41.76 g of tertiarybutylamine and 28.66 g of 2-chloroethoxyethanol in 115 ml of ethanol was charged to a 300 ml metal autoclave and heated under autogenous pressure at 150°C for 3 hrs. The contents of the cooled reactor were treated with KOH and the product was isolated as described in Example 1. The yield of product was 77 %, based on 28.65 g of recovered product. Thus, it can be seen that the high temperature has a dramatic effect on the rate of producing the severely sterically hindered secondary aminoether alcohol.

**Example 3**

Preparation of tertiarybutylaminoethoxyethanol (TBEE)

A solution of 45.63 g (0.625 mole) of tertiarybutylamine and 31 g (0.25 mole) of 2-chloroethoxyethanol in 100 ml of methanol was charged to a 300 ml steel autoclave and heated under autogenous pressure for 1 hour at 150°C. The reactor was cooled and the contents removed. To the homogeneous solution was added 11 g (0.275 mole) of NaOH pellets and the reaction mixture was refluxed for 0.5 - 1 hour, cooled, filtered, vacuum stripped, and distilled. The yield was 31.4 g (78 %).

**Example 4**

Preparation of tertiarybutylaminoethoxyethanol (TBEE)

The following example demonstrates the use of water as the polar solvent in preparing TBEE.

Tertiarybutylamine, 0.625 mole, 0.25 mole of 2-chloroethoxyethanol and 30 ml of water were heated for 1 hr. at 150°C in a steel autoclave. The maximum pressure was about 6.0 kg/cm$^2$. The reactor was cooled and the contents removed. To the homogeneous solution was added 11 g of NaOH and the reaction heated for one-half hour. The reaction was cooled, filtered, and distilled. Bp 121 - 3°C (15 mm). Yield 33.19 g (82.5 %).

**Example 5**

A solution of tertiarybutylamine, 2-chloroethoxyethanol, and solvent in the ratio detailed in the previous example was charged to a pressure reactor and heated at the temperature and times indicated in Table 1. The solvents employed are also shown in Table 1. The extent of TBEE formation was determined by gas chromatographic analysis.

**Table 1**
Solvent effects on rate of TBEE formation

| Solvent | BuOH | EtOH | MeOH | $H_2O$ | Temperature/time |
|---|---|---|---|---|---|
| % TBEE | 4.0 | 6.6 | 5.3 | 19.6 | 100°/15 mins. |
| % TBEE | 38.0 | 41.8 | 44.7 | 76.5 | 125°/30 mins. |

As shown in Table 1, water, as the polar solvent, provides a rate enhancement in the production of TBEE. Also, the use of water reduces solvent costs to a negligible amount and eliminates the need for solvent recovery and enables one to enjoy low solvent/reactant concentrations. Thus, water, as the polar solvent, provides significant technical and economic advantages in producing hindered amines such as TBEE.

**Example 6**

Preparation of 2-(2-isopropylamino)propoxyethanol

A total of 5.8 moles of isopropylamine, 134 g of 6-hydroxy-3-oxa-2-hexanone and 4 g of 10 % Pd/C in 150 ml of ethanol was charged to an autoclave, pressured to 78.0 kg/cm² with hydrogen and heated at 100°C for 6 hours. The contents of the cooled autoclave were filtered and distilled. Yield, 169 g, b.p. 119°C at 20 mm. Analysis calc. for $C_8H_{19}NO_2$: %C, 59.63; %H, 11.80; %N, 8.70; found: %C, 59.07, %H, 11.89; %N, 8.11.

**Example 7**

Preparation of 2-(2-tertiarybutylamino)propoxyethanol

A total of 314 g of tertiarybutylamine, 110 g of 6-hydroxy-4-oxa-2-hexanone and 3 g of 10 % Pd/C in 200 ml of methanol was reacted under 90 kg/cm² of hydrogen at 100°C for 7 hrs. Isolation of product as described in Example 3 yielded 20.8 g of the titled amine, which had a b.p. of 122°C at 19 mm. Analysis calcd. for $C_9H_{21}NO_2$: %N, 8.00; found: %N, 7.28.

**Example 8**

Preparation of (1-methyl-1-ethylpropylamino)ethoxyethanol

A solution of 124.7 g of 1-methyl-1-ethylpropylamine and 76.9 9 of 2-chloroethoxyethanol in 300 ml of ethylene glycol monomethylether was refluxed overnight. The reaction mixture was treated with a stoichiometric excess of KOH and refluxed for one hour, filtered, and distilled. The product had a b.p. of 153°C (2 mm). Analysis calculated for $C_{10}H_{23}NO_2$: %N, 7.4; found: %N, 7.15.

**Example 9**

Preparation of tertiarylamyaminoethoxyethanol

In the manner described in Example 8, 129.7 g of tertiaryamylamine and 92.2 g of 2-chloroethoxyethanol yielded 86.5 g of tertiaryamylaminoethoxyethanol having a b.p. of 124°C (10 mm).

Comparison preparation of secondary butylaminoethoxyethanol (SBEE) (for comparison tests in $H_2S$ removal)

In the manner described in Example 7, 131 g of secondary butylamine and 93 g of 2-chloroethoxyethanol yielded 73 g of secondarybutylaminoethoxyethanol having a b.p. of 120°C (10 mm). Analysis calculated for $C_8H_{19}NO_2$: %N, 8.70; found: %N, 8.45.

**Example 10**

Preparation of N-methyl-N-tertiarybutylaminoethoxyethanol (MTBEE).

A total of 145 g of tertiarybutylaminoethoxyethanol, 108 g of 37 % aqueous formaldehyde, 10 g of 10 % Pd/C, and 1 liter of methanol was charged to an autoclave, pressured up to 70.3 kg/cm² with $H_2$ and heated at 80°C for 8 hours. Filtration and distillation of the reaction mixture yielded 128 g of N-methyl-N-tertiarybutylaminoethoxyethanol with b.p. of 128°C at 23 mm.

**Example 11**

Preparation of 2(N-isopropyl-N-methylamino)propoxyethanol (2-IMPE)

A total of 155 g of 2(isopropylamino)propoxyethanol, 122 g of 37 % aqueous formaldehyde, 5 g of 10 % Pd/C and 1 liter of methanol was charged to an autoclave, pressured to 70.3 kg/cm$^2$ with $H_2$ and heated at 80°C for 3 hours. Filtration and distillation of the reaction mixture yielded 159 g of 2-(N-isopropyl-N-methylamino)-propoxyethanol with b.p. of 125°C at 20 mm.

**Example 12**

Preparation of 3-aza-2,2,3-trimethyl-1,6-hexanediol

A solution of 60 g of 3-aza-2,2-dimethyl-1,6-hexanediol, 53.5 g of formic acid and 36.3 g of 37 % aqueous formaldehyde was refluxed for 40 hours. A total of 20 ml of concentrated hydrochloric acid was added and the reaction mixture was distilled until the overhead temperature was 110°C. Water, in an amount of 40 ml, was added to the distillation residue and made strongly alkaline with KOH. The organic phase was separated and distilled to yield 39.9 g of 3-aza-2,2,3-trimethyl-1,6-hexanediol with a b.p. of 103°C at 0.35 mm, a summation $-E_s$ value of 2.20 and a $pK_a$ of 9.35.

**Example 13**

Selective $H_2S$ removal from a mixture containing $H_2S$ and $CO_2$

Fig. 1 illustrates the sparged absorber unit, operated on a semi-batch mode, used to evaluate the selectivity for $H_2S$ removal of the amino compounds of the invention herein. A gas mixture comprised of 10 % $CO_2$, 1 % $H_2S$ and 89 % $N_2$, expressed as volume percent, respectively, was passed from a gas cylinder (not shown) through line 30 to a meter 31 measuring the rate at which the gas is fed to the absorber. For all examples this rate was 3.6 liters per minute. The gas was then passed through line 32 to a gas chromatography column (not shown) continuously monitoring the composition of the inlet gas and through lines 33 and 34 to a sparged absorber unit 35, which is a cylindrical glass tube 45 cm high and 3.1 cm in diameter charged with 100 ml of the absorbent amine solution 36. The gas was passed through the solution at a solution temperature of 40°C, and 10-ml samples of the solution were periodically removed from the bottom of the absorber unit through lines 34 and 37 to be analyzed for $H_2S$ and $CO_2$ content. The $H_2S$ content in the liquid sample was determined by titration with silver nitrate. The $CO_2$ content of the liquid sample was then analyzed by acidifying the sample with an aqueous solution of 10 % HCl and measuring the evolved $CO_2$ by weight gain on NaOH-coated asbestos.

While the solution was being periodically withdrawn from the bottom of the absorber unit, the gas mixture was removed from the top thereof via line 38 to a trap 39 which served to scrub out any $H_2S$ in the outlet gas. The resulting gas could optionally then passed via lines 40 and 41 for final disposal or via line 42 to a gas chromatography column (not shown) for periodic evaluation of the composition of the outlet gas to check for system leaks. For purposes of the examples, the $H_2S$ and $CO_2$ contents of the inlet gas phase were measured and the $H_2S$ and $CO_2$ contents of the liquid phase were determined as described above. These data were used to calculate selectivity values of the amine as defined above, which were plotted as a function of the loading of the absorbent solution with $H_2S$ and $CO_2$, in units of moles acid gas per mole of the amino compound.

The above procedure was employed using as the absorbent solution aqueous 3M solutions of tertiary-butylaminoethoxyethanol (TBEE) ($pK_a$=10.3, summation $-E_s$ = 2.10), tertiarybutylaminoethanol (TBE) (comparison) ($pK_a$ = 10.2, b.p. = 90°C at 25 mm), and methyldiethanolamine (MDEA) (comparison-a conventionally used amine for selective $H_2S$ removal) (summation $-E_s$ = 0.79). The selectivity plot for each amine solution is shown in Fig. 2.

As can be seen from Fig. 2, TBEE is superior to both TBE and especially MDEA in terms of $H_2S$ selectivity, particularly at high $H_2S$ and $CO_2$ loadings. It is noteworthy that TBEE is superior to TBE even though both compounds have a $pK_a$ of about 10.3.

**Example 14**

The procedure of Example 13 was repeated using as the absorbent solution aqueous 3M solutions of tertiarybutylaminoethoxyethanol (TBEE), secondarybutylaminoethoxyethanol (SBEE) (comparison) (summation $-E_s$ = 1.32 as Prepared in Comparison Preparation 2), isopropylaminoethoxyethanol (IPEE) (comparison) (summation $-E_s$ = 1.29) and methyldiethanolamine ( MDEA) (comparison). The selectivity plot for each amine solution is shown in Fig. 3. The plots clearly show that TBEE is far superior to SBEE, IPEE and MDEA in terms of $H_2S$ selectivity. The plots taken together with the summation (Taft) $-E_s$ values for the compounds tested also

indicate that the severe steric hindrance of TBEE (resulting from the additional carbon atoms attached to the carbon atom directly attached to the nitrogen atom) has a profound effect on the selective $H_2S$ absorption properties of the amino compound.

**Example 15**

The procedure of Example 13 was repeated using as the absorbent solution aqueous 3M solutions of N-methyl-N-tertiarybutylaminoethoxyethanol (MTBEE) summation $-E_s$ = 2.17, $pK_a$ = 10.15), 2(N-isopropyl-N-methylamino)propoxyethanol (2-IMPE) (summation $-E_s$ = 1.93, $pK_a$ = 9.55), and methyldiethanolamine (MDEA) (comparison) using the same gas mixture and conditions. From the plots of selectivity for $H_2S$ removal and loading shown in Fig. 4 it can be seen that MTBEE and 2-IMPE have a higher $H_2S$ selectivity than MDEA.

**Example 16**

The procedure of Example 13 was repeated except that an aqueous 1M solution of N-methyl-N-tertiarybutylaminoethoxyethanol (MTBEE) was used as absorbent solution along with an aqueous 1.6M solution of methyldiethanolamine (MDEA) as comparison using the same gas mixture and conditions. From the plots of selectivity for $H_2S$ removal shown in Fig. 5, it can be seen that the capacity for $H_2S$ of MTBEE increases with decreasing solution concentration, whereas the capacity for $H_2S$ of MDEA decreases with decreasing concentration.

**Example 17**

The procedure of Example 13 was repeated except that an aqueous 3M solution of N-methyl-N-tertiarybutylaminoethoxyethanol (MTBEE) was compared with N-tertiarybutyldiethanolamine (TBDEA) (summation $-E_s$ = 2.46, $pK_a$ = 8.2) as comparison using the same gas mixture and conditions. From the plots of selectivity for $H_2S$ removal shown in Fig. 6, it can be seen that MTBEE has a higher $H_2S$ selectivity than TBDEA.

The data in Figs. 2, 4 and 5 also show that the amino compounds of the present invention have very high capacity for both $H_2S$ and $CO_2$ compared to methyldiethanolamine (MDEA) in addition to high $H_2S$ selectivities. It will be apparent from an inspection of the data in Fig. 2 that if the absorption process is conducted under conditions such that the amino compound has a long contact time with the gases to be absorbed, the selectivity for $H_2S$ decreases, but the overall capacity for both $CO_2$ and $H_2S$ remains rather high. Therefore, one may, in some instances, wish to carry out a non-selective acid gas absorption process to take advantage of the large absorption capacity of the amino compounds of the invention. Such "non-selective" processes are particularly useful in scrubbing natural gases which contain relatively high levels of $H_2S$ and low to nil levels of $CO_2$. As such, the amino compounds of the present invention may replace some or all of monoethanolamine (MEA) or diethanolamine (DEA) commonly used for such scrubbing processes.

The amino compounds herein are typically capable of reducing the $H_2S$ in gaseous mixtures to a relatively low level, e.g., less than about 200 ppm and typically have a relatively high capacity for $H_2S$, e.g., greater than about 0.5 mole of $H_2S$ per mole of amine. The amino compounds are characterized as having a "kinetic selectivity" for $H_2S$, i.e., a faster reaction rate for $H_2S$ than for $CO_2$ at absorption conditions. In addition, they have a higher capacity for $H_2S$ at equivalent kinetic selectivity for $H_2S$ over $CO_2$. This higher capacity results in the economic advantage of lower steam requirements during regeneration.

**Example 18**

Continuous process for selective $H_2S$ removal

This example demonstrates a comparison of the severely sterically hindered secondary aminoether alcohol, tertiarybutylaminoethoxyethanol (TBEE), with methyldiethanolamine (MDEA) using a unit such as that shown in Fig. 7.

An aqueous 1.5M solution of tertiarybutylaminoethoxyethanol (TBEE) was charged via pipe 5 into the upper portion of a gas-liquid countercurrent absorption column 2 having a lower section 3 and an upper section 4 and being segregated by three packed beds. The gas to be purified was a synthetic mixture containing 1 % $H_2S$, 11 % $CO_2$ and 88 % $N_2$, expressed as volume percent, respectively. The gas was introduced through line 1 into the lower portion of column 2 at a gas flow rate of 67 standard cubic feet per minute. The absorber pressure was adjusted to 31 psia. The gas feed from $H_2S$ left through pipe 6 and was analyzed. The aqueous amine solution containing $H_2S$ and $CO_2$ was flowed toward the lower portion of the absorber, from which it was discharged

through pipe 7. The solution was then passed via pump 8 through a simulated heat exchanger and cooler 9 disposed in pipe 7, which allowed the hot solution from the regenerator 12 to equilibrate in temperature with the cooler solution from the absorber column 2. The hot rich solution was then entered, via pipe 7, to a flash drum 10 equipped with a line (not shown) which vents to line 13 and then introduced by pipe 11 into the upper portion of the regenerator 12, which is equipped with several plates and effects desorption of the $H_2S$ gas. The pressure of the regenerator was set at 2.3 kg/cm$^2$. The $H_2S$ gas was passed through a pipe 13 into a condenser 14 wherein cooling and condensation of water and amine solution from the gas occurred. The gas was then entered into a separator 15 where further condensation took place. The condensed solution was returned through pipe 16 to the upper portion of the regenerator 12. The gas remaining from the condensation which contains $H_2S$ and some $CO_2$ may be removed through pipe 17 for final disposal (e.g., to a vent or incinerator or to an apparatus which converts the $H_2S$ to sulfur such as a claus unit or a Stretford conversion unit (not shown)). The solution liberated from the gas which it contained was flowed downward through the regenerator 12 and left through pipe 18 at the bottom of the regenerator for transfer to a reboiler 19. Reboiler 19, equipped with a steam injection pipe 20 and a condensate exit pipe (not shown), vaporized a portion of this solution to drive additional $H_2S$ therefrom. The $H_2S$ driven off was returned via pipe 21 to the lower section of the regenerator 12 and left through pipe 13, for entry into the condensation stages of gas treatment. The solution remaining in the reboiler 19 was drawn through pipe 22, cooled in heat exchanger 9, and introduced via the action of pump 23 through pipe 5 into absorber 2.

The flow rate was slowly adjusted downward until the $H_2S$ leak rate showed a dramatic increase. The experiment was repeated using in place of tertiarybutylaminoethoxyethanol (TBEE), an aqueous 3M solution of methyldiethanolamine (MDEA) as comparison. The results of both experiments were plotted wherein the $H_2S$ leak rate, in parts per million by volume (Vppm), was plotted against $H_2S$ loading in mols/mol amine. The results are shown in Fig. 8. These results show that tertiarybutylaminoethoxyethanol gives far greater cleanup, even at higher $H_2S$ loadings, in a continuous selective $H_2S$ removal process than methyldiethanolamine (MDEA).

In summary, this invention is seen to provide a special class of amino compounds characterized as being severely sterically hindered acyclic secondary and tertiary amino alcohols.

## Claims

1. A secondary or tertiary amino alcohol characterised by the general formula:

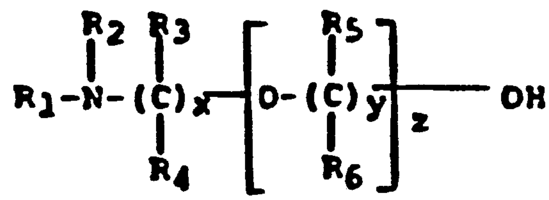

wherein $R_3$ $R_4$ and $R_5$ are each independently hydrogen or alkyl or hydroxyalkyl radicals having 1 to 4 carbon atoms, x and y are each 2, 3 or 4; wherein the secondary amino alcohol is a secondary aminoether alcohol in which $R_1$ has the formula

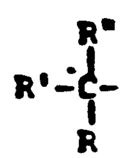

where R and R' are each independently alkyl or hydroxyalkyl radicals having 1 - 4 carbon atoms and R" is hydrogen or an alkyl or hydroxyalkyl radical having 1 to 4 carbon atoms, $R_2$ and $R_6$ are hydrogen, and z is 1, 2, 3 or 4 with the proviso that when R" is hydrogen at least one of $R_3$ and $R_4$ bonded to the carbon atom which is directly bonded to the nitrogen atom is an alkyl or hydroxyalkyl radical having 1 to 4 carbon atoms; and

wherein the tertiary amino alcohol is a tertiary amino alcohol and z is zero, or is a tertiary amino ether alcohol and z is 1 to 4; $R_1$ and $R_2$ are each independently alkyl radicals having 1 to 8 carbon atoms or hydroxyalkyl radicals having 2 to 8 carbon atoms with the proviso that the carbon atoms of $R_1$ and $R_2$ which are attached to the nitrogen atoms cannot both be primary, $R_6$ is hydrogen or an alkyl or hydroxyalkyl radical having 1 to 4 carbon atoms; with the proviso in the tertiary compounds that (i) if the said carbon atom of one of $R_1$ and $R_2$ is

secondary and the said carbon atom of the other of $R_1$ and $R_2$ is primary, at least one of $R_3$ and $R_4$ is an alkyl or hydroxyalkyl radical; or (ii) if when z is zero both said carbon atoms of $R_1$ and $R_2$ are secondary then at least one of $R_1$ and $R_2$ is a said $C_2$ - $C_8$ hydroxyalkyl radical.

2. A secondary or tertiary amino alcohol characterized by the general formula:

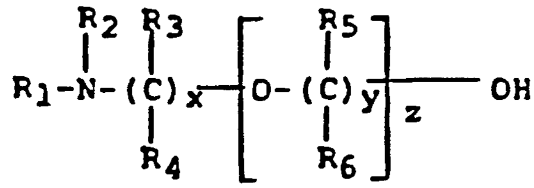

wherein $R_3$, $R_4$ and $R_5$ are each independently hydrogen or alkyl or hydroxyalkyl radicals having 1 to 4 carbon atoms, x and y are each 2, 3 or 4, and wherein the set amino alcohol is a secondary aminoether alcohol, $R_1$ has the formula

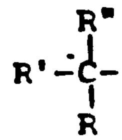

where R and R' are each independently alkyl or hydroxyalkyl radicals having 1 - 4 carbon atoms and R" is hydrogen or an alkyl or hydroxyalkyl radical having 1 to 4 carbon atoms, $R_2$ and $R_6$ are hydrogen, and z is 1, 2, 3 or 4 with the proviso that when R" is hydrogen at least one of $R_3$ and $R_4$ is an alkyl or hydroxyalkyl radical having 1 to 4 carbon atoms; and wherein if the amino alcohol is a tertiary amino alcohol, $R_1$ and $R_2$ are each independently cycloalkyl or hydroxycycloalkyl radicals having 3 to 5 carbon atoms or one of $R_1$ and $R_2$ is a cycloalkyl or hydroxycycloalkyl radical having 3 to 8 carbon atoms and the other of $R_1$ and $R_2$ is a $C_1$ to $C_8$ alkyl radical or a $C_2$ to $C_8$ hydroxyalkyl radical with the proviso that the carbon atoms of $R_1$ and $R_2$ which are attached to the nitrogen atoms cannot both be primary, $R_6$ hydrogen or an alkyl or hydroxyalkyl radical having 1 to 4 carbon atoms and z is zero, 1, 2, 3 or 4, with the proviso that if the said carbon atom of $R_1$ is secondary and the said carbon atom of $R_2$ is primary, at least one of $R_3$ and $R_4$ is an alkyl or hydroxyalkyl radical.

3. A secondary aminoether alcohol according to claim 1 having the general formula:

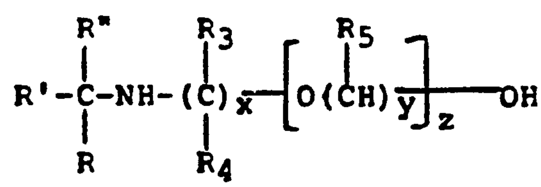

wherein R, R', R", $R_3$, $R_4$, $R_5$, x, y and z are as defined for secondary aminoether alcohols in claim 1.

4. A secondary aminoether alcohol according to claim 3 which is 2-(2-tertiarybutylamino)propoxyethanol or 2-(2-isopropylamino)propoxyethanol.

5. A secondary aminoether alcohol according to claim 3 which is tertiarybutylaminoethoxyethanol.

6. A tertiary amino alcohol according to claim 1 having the general formula:

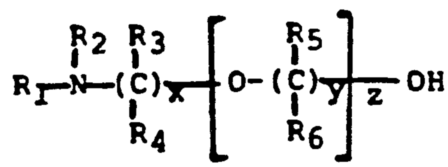

wherein $R_1$, $R_2$, $R_3$, $R_4$, $R_5$, $R_6$, x, y and z are as defined for tertiary amino alcohols in either of claims 1 and 2.

7. A tertiary amino alcohol according to claim which is 2-(N-isopropyl-N-methylamino) propoxyethanol or 3-aza-2,2,3-trimethyl-1,6-hexa nediol.

8. A tertiary amino alcohol according to claim 6 which is N-methyl-N-tertiarybutylaminoethoxyethanol.

**Revendications**

1. Amino(secondaire ou tertiaire)alcool, caractérisé par la formule générale:

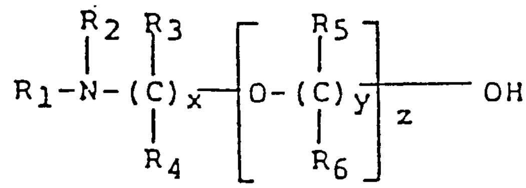

dans laquelle $R_3$, $R_4$ et $R_5$ représentent chacun, indépendamment un atome d'hydrogène ou un radical alkyle ou hydroxyalkyle ayant 1 à 4 atomes de carbone, x et y valent chacun 2, 3 ou 4; dans laquelle l'amino(secondaire)alcool est un amino(secondaire) -éther alcool, dans lequel $R_1$ a pour formule:

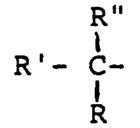

dans laquelle R et R' sont chacun, indépendamment, des radicaux alkyles ou hydroxyalkyles ayant 1 à 4 atomes de carbone et R" représente un atome dhydrogène ou un radical alkyle ou hydroxyalkyle ayant 1 à 4 atomes de carbone, $R_2$ et $R_6$ sont des atomes d'hydrogène, et z vaut 1, 2, 3 ou 4, à la condition que, lorsque R" est un atome d'hydrogène, au moins l'un des $R_3$ et $R_4$ fixés à l'atome de carbone qui est directement relié à l'atome d'azote est un radical alkyle ou hydroxyalkyle ayant 1 à 4 atomes de carbone; et dans laquelle l'amino(tertiaire) alcool est un amino(tertiaire) alcool et z est zéro, ou bien est un amino(tertiaire) éther alcool et z vaut de 1 à 4, $R_1$ et $R_2$ sont chacun, indépendamment, des radicaux alkyles ayant 1 à 8 atomes de carbone ou des radicaux hydroxyalkyles ayant 2 à 8 atomes de carbone, à la condition que les atomes de carbone de $R_1$ et $R_2$ qui sont fixés aux atomes d'azote ne puissent pas tous deux être primaires, $R_6$ représente un atome d'hydrogène ou un radical alkyle ou hydroxyalkyle ayant 1 à 4 atomes de carbone à la condition que dans les composés tertiaires (i) si ledit atome de carbone de l'un de $R_1$ et $R_2$ est primaire au moins l'un des $R_3$ et $R_4$ est un radical alkyle ou hydroxyalkyle; ou (ii) si, lorsque z est zéro, les deux dits atomes de carbone de $R_1$ et $R_2$ sont secondaires, alors au moins un des $R_1$ et $R_2$ est un dit radical hydroxyalkyle en $C_1$ à $C_8$.

2. Amino(secondaire ou tertiaire)alcool, caractérisé par la formule générale:

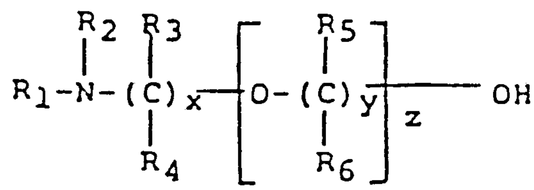

dans laquelle $R_3$, $R_4$ et $R_5$ représentent chacun, indépendamment, un atome d'hydrogène ou un radical alkyle ou hydroxyalkyle ayant 1 à 4 atomes de carbone, x et y valent chacun 2, 3 ou 4, et, si l'amino(secondaire)-alcool est un amino (secondaire)éther alcool, $R_1$ a pour formule:

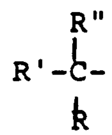

dans laquelle R et R' représentent chacun, indépendamment, des radicaux alkyles ou hydroxyalkyles ayant 1 à 4 atomes de carbone et R" représente un atome d'hydrogène ou un radical alkyle ou hydroxyalkyle ayant 1 à 4 atome de carbone, $R_2$ et $R_6$ représentent des atomes d'hydrogène, et z vaut 1, 2, 3 ou 4, à la condition que lorsque R" représente un atome d'hydrogène, l'un au moins des radicaux $R_3$ et $R_4$ soit un radical alkyle ou hydroxyalkyle ayant 1 à 4 atomes de carbone, et dans laquelle, si l'amino-alcool est un amino(tertiaire)alcool, $R_1$ et $R_2$ sont chacun, indépendamment, des radicaux cycloalkyles ou hydroxycycloalkyles ayant 3 à 5 atomes de carbone ou bien l'un des $R_1$ et $R_2$ est un radical cycloalkyle ou hydroxycycloalkyle ayant 3 à 8 atomes de carbone et l'autre des $R_1$ et $R_2$ est un radical alkyle en $C_1$ à $C_8$ ou un radical hydroxyalkyle en $C_2$ à $C_8$, à la condition que les atomes de carbone de $R_1$ et $R_2$ qui sont fixés sur les atomes d'azote ne puissent pas tous deux être primaires, $R_6$ représente un atome d'hydrogène ou un radical alkyle ou hydroxyalkyle ayant 1 à 4

atomes de carbone; et z vaut 0, 1, 2, 3 ou 4, à la condition que, si ledit atome de carbone de $R_1$ est secondaire, et si ledit atome de carbone de $R_2$ est primaire, au moins l'un des $R_3$ et $R_4$ représente un radical alkyle ou hydroxyalkyle.

3. Amino (secondaire) éther alcool selon la revendication 1, répondant à la formule générale:

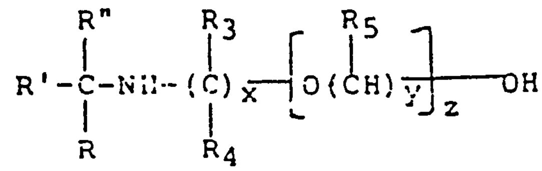

dans laquelle R, R', R", $R_3$, $R_4$, $R_5$, x y et z sont tels que définis pour les amino(secondaire)éther alcools à la revendication 1.

4. Amino(secondaire)éther alcool selon la revendication 3, qui est le 2-(2-tertiobutylamino)propoxyéthanol ou le 2-(2-isopropylamino)propoxyéthanol.

5. Amino(secondaire)éther alcool selon la revendication 3, qui est le tertiobutylaminoéthoxyéthanol.

6. Amino(tertiaire)alcool selon la revendication répondant à la formule générale:

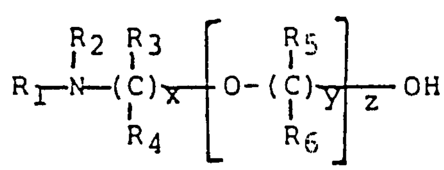

dans laquelle $R_1$, $R_2$, $R_3$, $R_4$, $R_5$, $R_6$, x, y et z sont tels que définis pour des amino(tertiaire)alcools dans l'une des revendications 1 et 2.

7. Amino(tertiaire)alcool selon la revendication 6, qui est le 2-(N-isopropyl-N-méthylamino)propoxyéthanol ou le 3-aza-2,2,3-triméthyl-1,6-hexanediol.

8. Amino(tertiaire)alcool selon la revendication 6, qui est le N-méthyl-N-tertiobutylaminoéthoxyéthanol.

**Patentansprüche**

1. Sekundärer oder tertiärer Aminoalkohol, gekennzeichnet durch die allgemeine Formel:

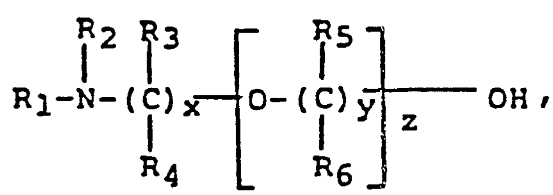

in der $R_3$, $R_4$ und $R_5$ jeweils unabhängig voneinander Wasserstoff oder Alryl- oder Hydroxyalkylreste mit 1 bis 4 Kohlenstoffatomen sind, x und y jeweils 2, 3 oder 4 sind, wobei der sekundäre Aminoalkohol ein sekundärer Aminoetheralkohol ist, in dem $R_1$ die Formel

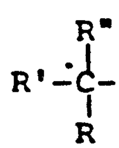

besitzt, wobei R und R' jeweils unabhängig Alkyl- oder Hydroxyalkylreste mit 1 bis 4 Kohlenstoffatomen sind und R" Wasserstoff oder ein Alkyl- oder Hydroxyalkylrest mit 1 bis 4 Kohlenstoffatomen ist, $R_2$ und $R_6$ Wasserstoff sind und z 1, 2, 3 oder 4 ist mit der Maßgabe, daß, wenn R" Wasserstoff ist, mindestens einer von $R_3$ und $R_4$ gebunden an das Kohlenstoffatom, das direkt an das Stickstoffatom gebunden ist, ein Alkyl- oder Hydroxyalkylrest mit 1 bis 4 Kohlenstoffatomen ist, und wobei der tertiäre Aminoalkohol ein tertiärer Aminoalkohol ist und z 0 ist oder ein tertiärer Aminoetheralkohol ist und z 1 bis 4 ist, $R_1$ und $R_2$ jeweils unabhängig Alkylreste mit 1 bis 8 Kohlenstoffatomen oder Hydroxyalkylreste mit 2 bis 8 Kohlenstoffatomen

sind mit der Maßgabe, daß die Kohlenstoffatome von $R_1$ und $R_2$, die an die Stickstoffatome gebunden sind, nicht beide primär sein können, $R_6$ Wasserstoff oder ein Alkyl- oder Hydroxyalkylrest mit 1 bis 4 Kohlenstoffatomen ist mit der Maßgabe bei den tertiären Verbindungen, daß (i), wenn das Kohlenstoffatom von einem von $R_1$ und $R_2$ sekundär und das Kohlenstoffatom von dem anderen von $R_1$ und $R_2$ primär ist, mindestens einer von $R_3$ und $R_4$ ein Alkyl- oder Hydroxyalkylrest ist, oder (ii), wenn im Falle von $z = 0$ beide Kohlenstoffatome von $R_1$ und $R_2$ sekundär sind, dann mindestens einer von $R_1$ und $R_2$ ein $C_2$ - $C_8$-Hydroxyalkylrest ist.

2. Sekundärer oder tertiärer Aminoalkohol, gekennzeichnet durch die allgemeine Formel

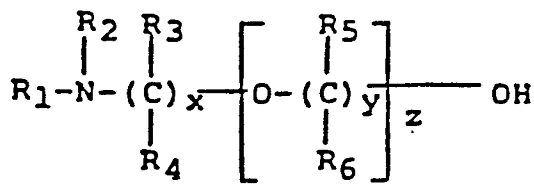 ,

in der $R_3$, $R_4$ und $R_5$ jeweils unabhängig Wasserstoff oder Alkyl- oder Hydroxyalkylreste mit 1 bis 4 Kohlenstoffatomen sind, x und y jeweils 2, 3 oder 4 sind und der sekundäre Aminoalkohol ein sekundärer Aminoetheralkohol ist, $R_1$ die Formel

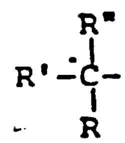

besitzt, wobei R und R' jeweils unabhängig Alkyl- oder Hydroxyalkylreste mit 1 bis 4 Kohlenstoffatomen sind und R" Wasserstoff oder ein Alkyl- oder Hydroxyalkylrest mit 1 bis 4 Kohlenstoffatomen ist, $R_2$ und $R_6$ Wasserstoff sind und z 1, 2, 3 oder 4 ist mit der Maßgabe, daß, wenn R" Wasserstoff ist, mindestens einer von $R_3$ und $R_4$ ein Alkyl- oder Hydroxyalkylrest mit 1 bis 4 Kohlenstoffatomen ist, und in der, wenn der Aminoalkohol ein tertiärer Aminoalkohol ist, $R_1$ und $R_2$ jeweils unabhängig voneinander Cycloalkyl - oder Hydroxycycloalkylreste mit 3 bis 5 Kohlenstoffatomen sind oder einer von $R_1$ und $R_2$ ein Cycloalkyl- oder Hydroxycloalkylrest mit 3 bis 8 Kohlenstoffatomen ist und der andere von $R_1$ und $R_2$ ein $C_1$ - $C_8$-Alkylrest oder ein $C_2$ - $C_8$-Hydroxyalkylrest ist mit der Maßgabe, daß die Kohlenstoffatome von $R_1$ und $R_2$, die an die Stickstoffatome gebunden sind, nicht beide primär sein können, $R_6$ Wasserstoff oder ein Alkyl- oder ein Hydroxyalkylrest mit 1 bis 4 Kohlenstoffatomen ist und z 0, 1, 2, 3 oder 4 ist mit der Maßgabe, daß, wenn das Kohlenstoffatom von $R_1$ sekundär ist und das Kohlenstoffatom von $R_2$ primär ist, mindestens einer von $R_3$ und $R_4$ ein Akyl- oder Hydroxyalkylrest ist.

3. Sekundärer Aminoetheralkohol nach Anspruch 1 mit der allgemeinen Formel:

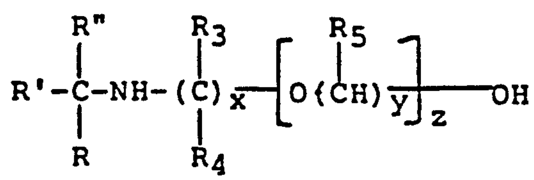 ,

in der R, R', R", $R_3$, $R_4$, $R_5$, x, y, z die für sekundäre Aminoetheralkohole in Anspruch 1 angegebene Bedeutung besitzen.

4. Sekundärer Aminoetheralkohol nach Anspruch 3, der 2-(2-tert.-Butylamino)-propoxyethanol oder 2-(2-Isopropylamino)-propoxyethanol ist.

5. Sekundärer Aminoetheralkohol nach Anspruch 3, der tert.Butylaminoethoxyethanol ist.

6. Tertiärer Aminoalkohol nach Anspruch 1, mit der allgemeinen Formel

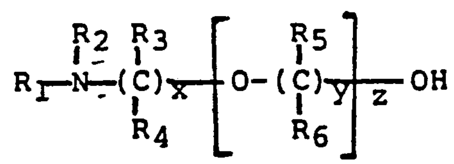 ,

in der $R_1$, $R_2$, $R_3$, $R_4$, $R_5$, $R_6$, x, y und z die in Anspruch 1 oder 2 für tertiäre Aminoalkohole angegebene Bedeutung besitzen.

7. Tertiärer Aminoalkohol nach Anspruch 6, der 2-(N-Isopropyl-N-Methylamino)-Propoxyethanol oder 3-Aza-2,2,3-trimethyl-1,6-hexandiol ist.

8. Tertiärer Aminoalkohol nach Anspruch 6, der N-Methyl-N-tert.Butylaminoethoxyethanol ist.

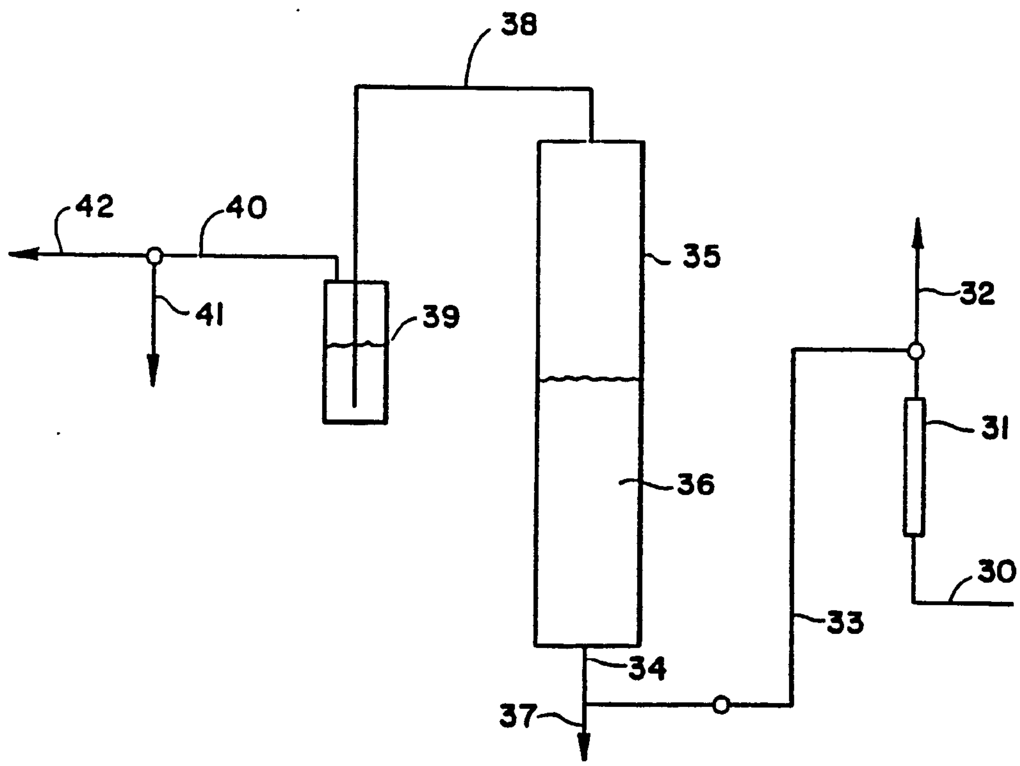


Sparged absorber unit for selective $H_2S$ removal

FIG. 1

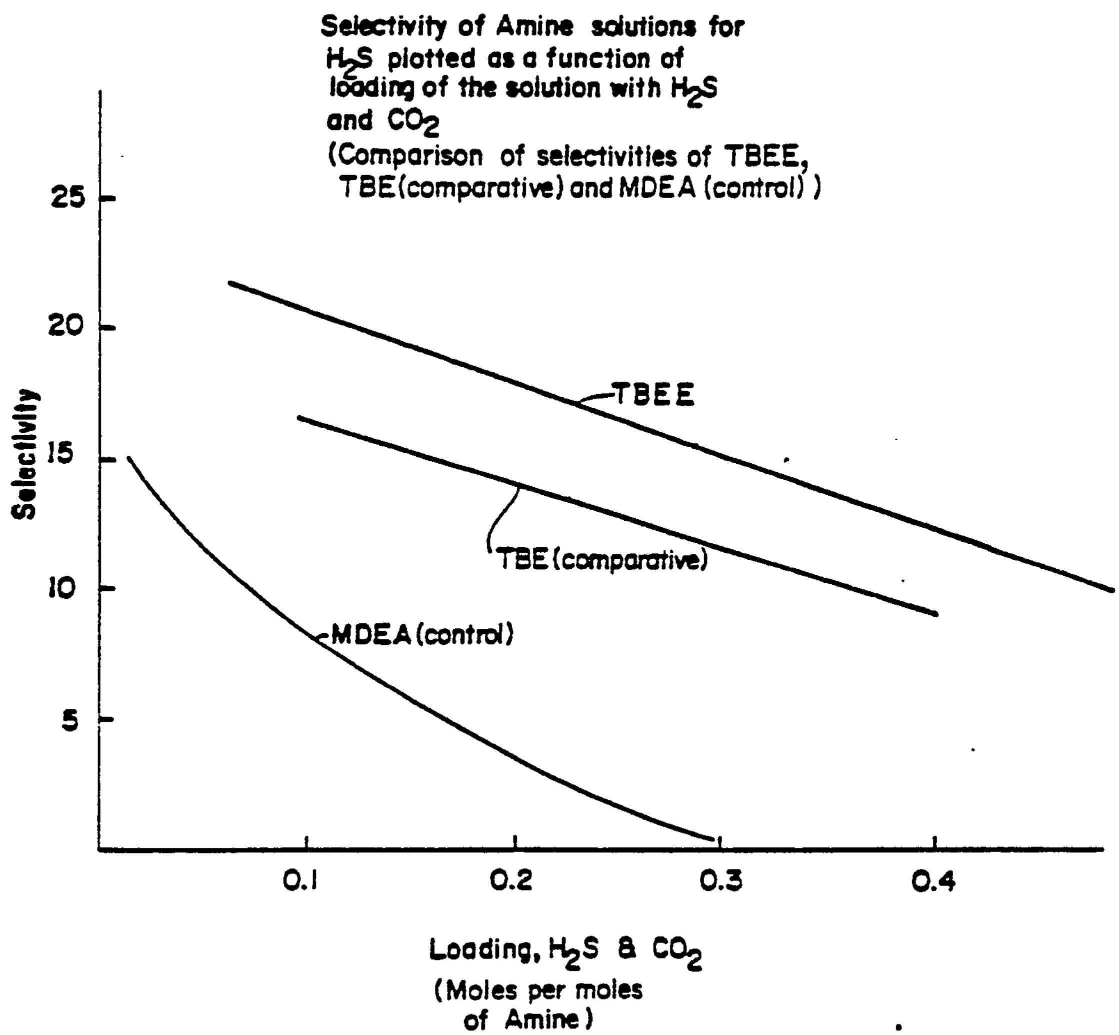
Selectivity of Amine solutions for
H2S plotted as a function of
loading of the solution with H2S
and CO2
(Comparison of selectivities of TBEE,
TBE(comparative) and MDEA (control))
25
20
15
10
5
Selectivity
TBEE
TBE (comparative)
MDEA (control)
0.1
0.2
0.3
0.4
Loading, H2S & CO2
(Moles per moles
of Amine)

FIG. 2

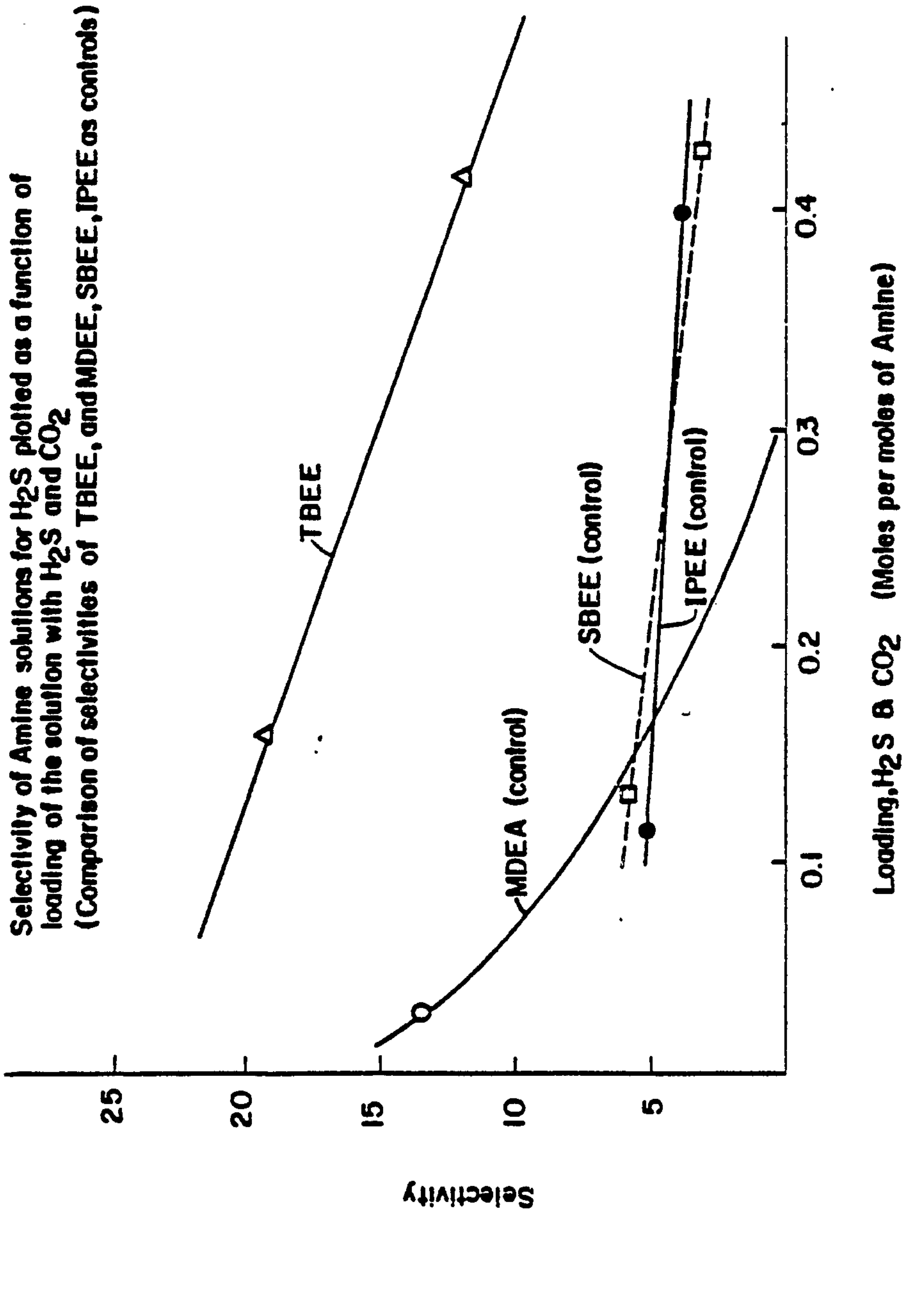
Selectivity of Amine solutions for $H_2S$ plotted as a function of loading of the solution with $H_2S$ and $CO_2$
(Comparison of selectivities of TBEE, and MDEE, SBEE, IPEE as controls)
TBEE
MDEA (control)
SBEE (control)
IPEE (control)
Selectivity
25
20
15
10
5
0.1
0.2
0.3
0.4
Loading, $H_2S$ & $CO_2$ (Moles per moles of Amine)

FIG. 3

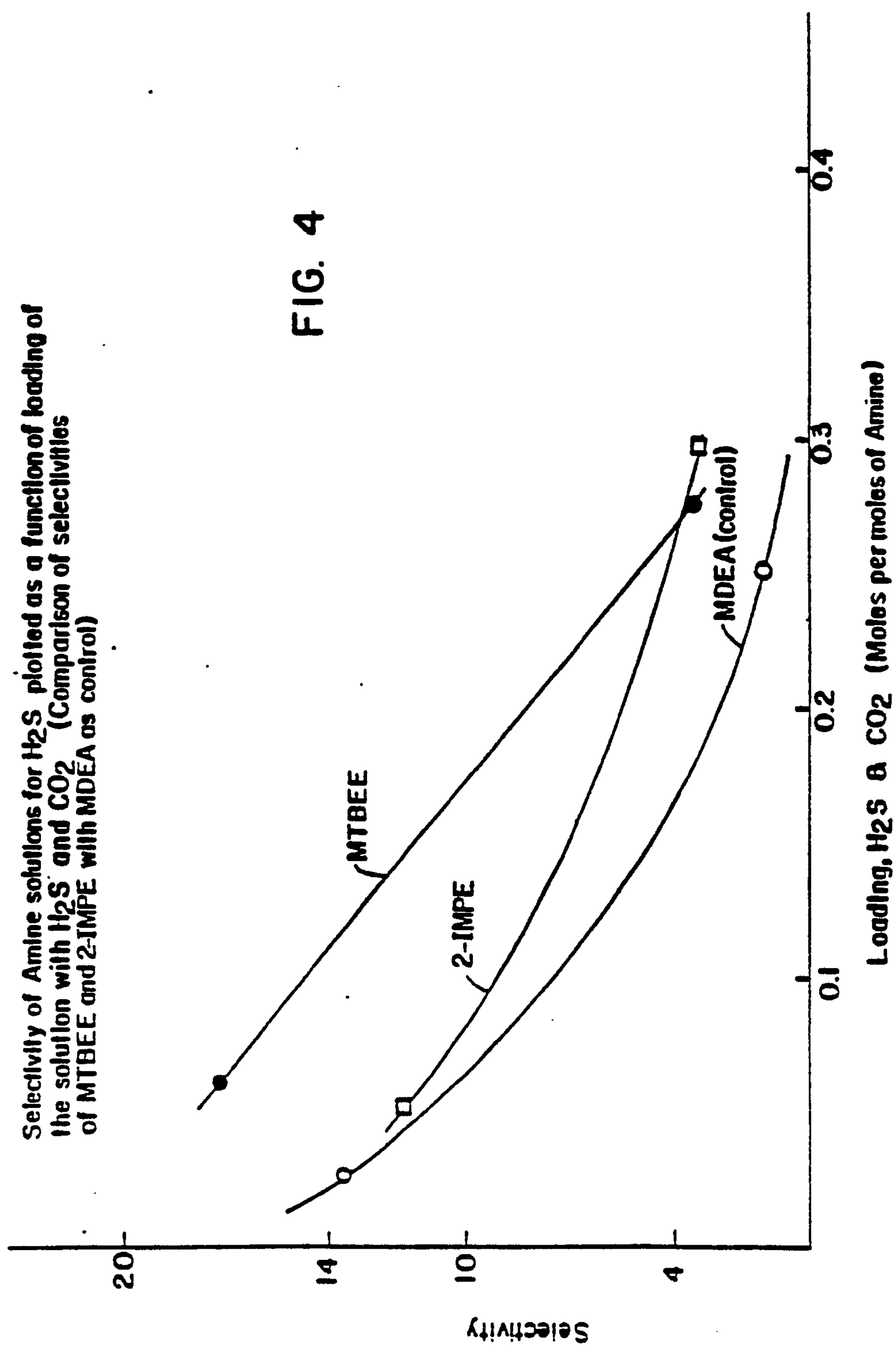
Selectivity of Amine solutions for $H_2S$ plotted as a function of loading of the solution with $H_2S$ and $CO_2$ (Comparison of selectivities of MTBEE and 2-IMPE with MDEA as control)
MTBEE
2-IMPE
MDEA (control)
Selectivity
20
14
10
4
0.1
0.2
0.3
0.4
Loading, $H_2S$ & $CO_2$ (Moles per moles of Amine)

FIG. 4

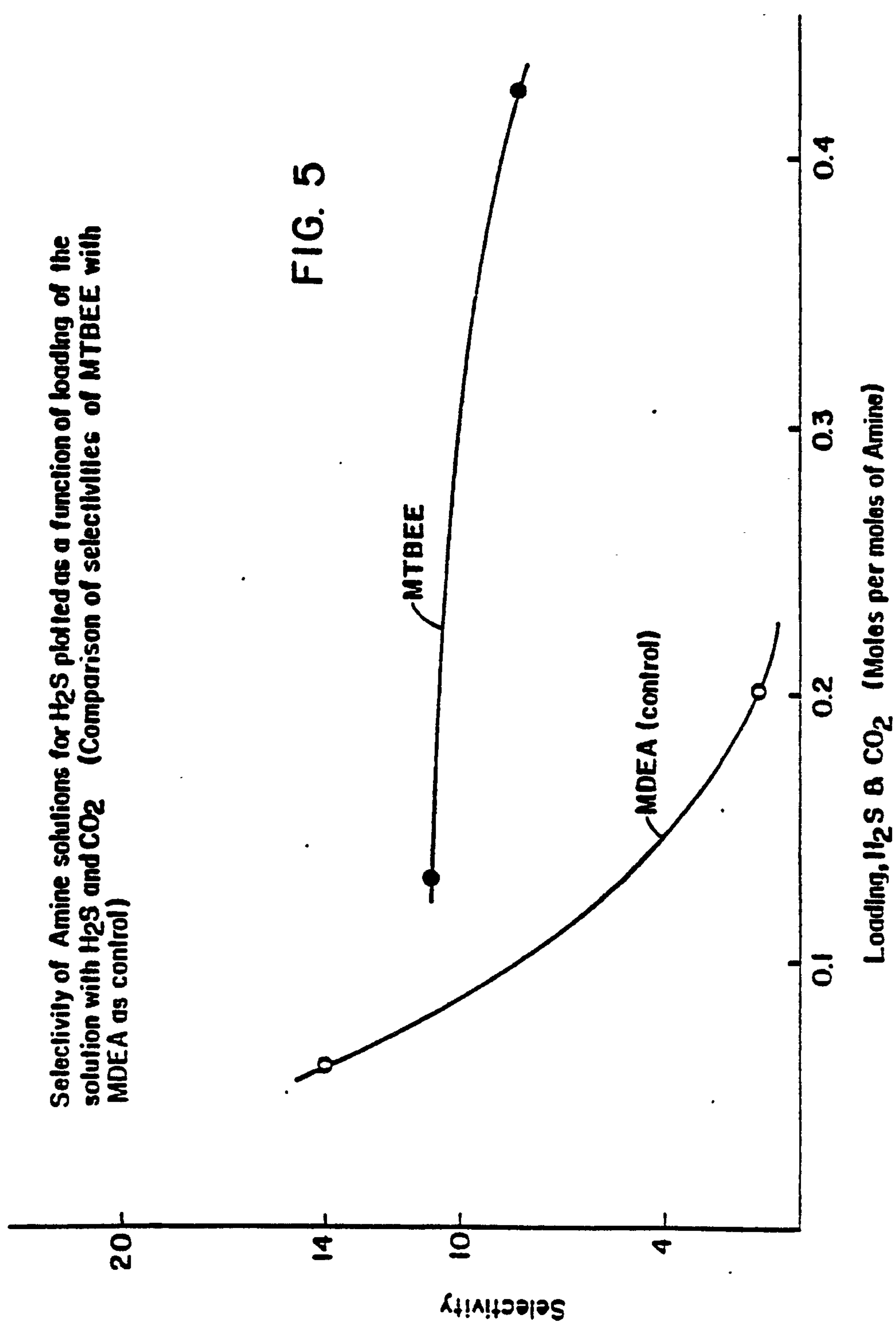
Selectivity of Amine solutions for $H_2S$ plotted as a function of loading of the solution with $H_2S$ and $CO_2$ (Comparison of selectivities of MTBEE with MDEA as control)
MTBEE
MDEA (control)
Selectivity
20
14
10
4
0.1
0.2
0.3
0.4
Loading, $H_2S$ & $CO_2$ (Moles per moles of Amine)

FIG. 5

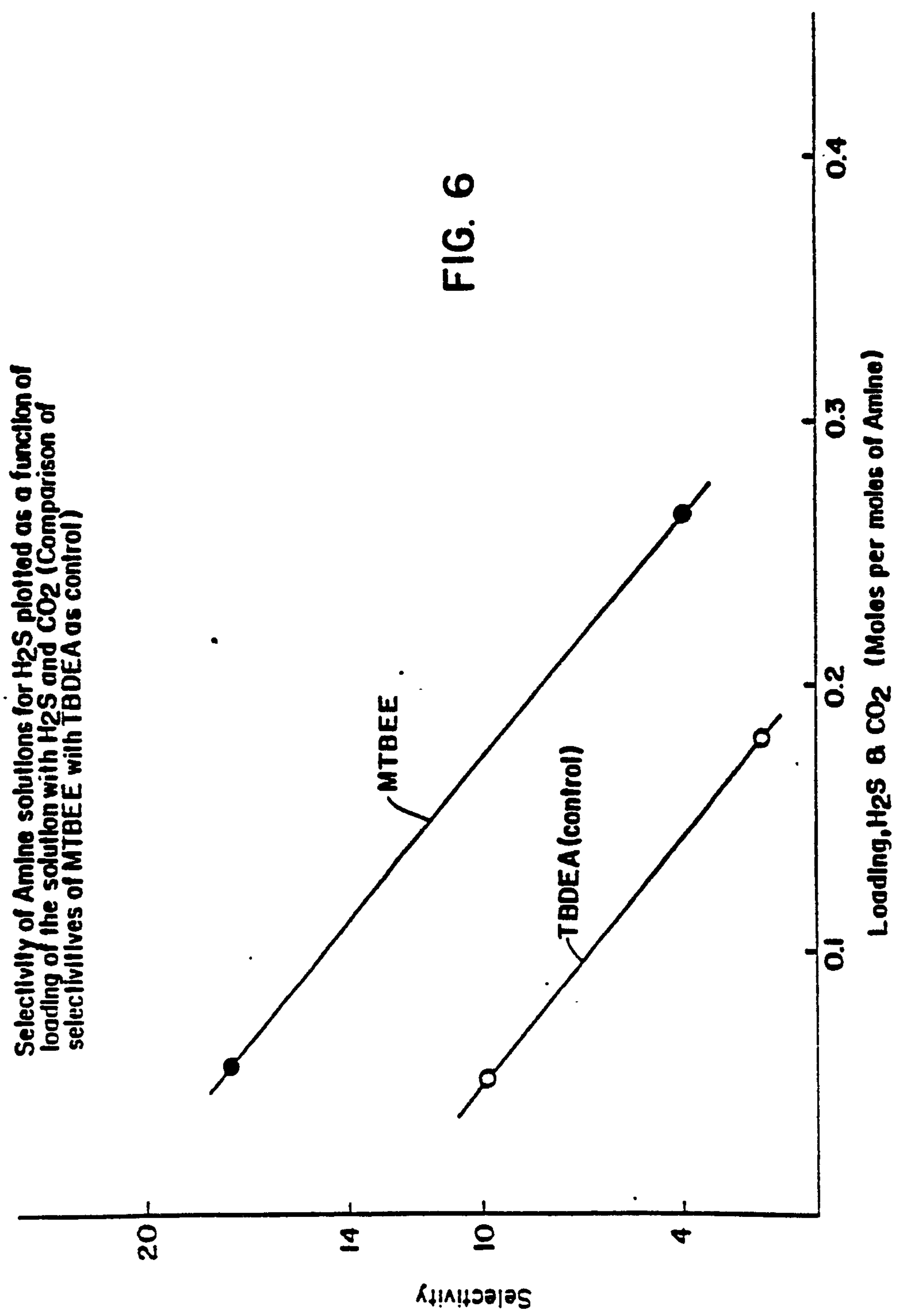
Selectivity of Amine solutions for $H_2S$ plotted as a function of loading of the solution with $H_2S$ and $CO_2$ (Comparison of selectivities of MTBEE with TBDEA as control)
MTBEE
TBDEA (control)
Selectivity
20
14
10
4
0.1
0.2
0.3
0.4
Loading, $H_2S$ & $CO_2$ (Moles per moles of Amine)

FIG. 6

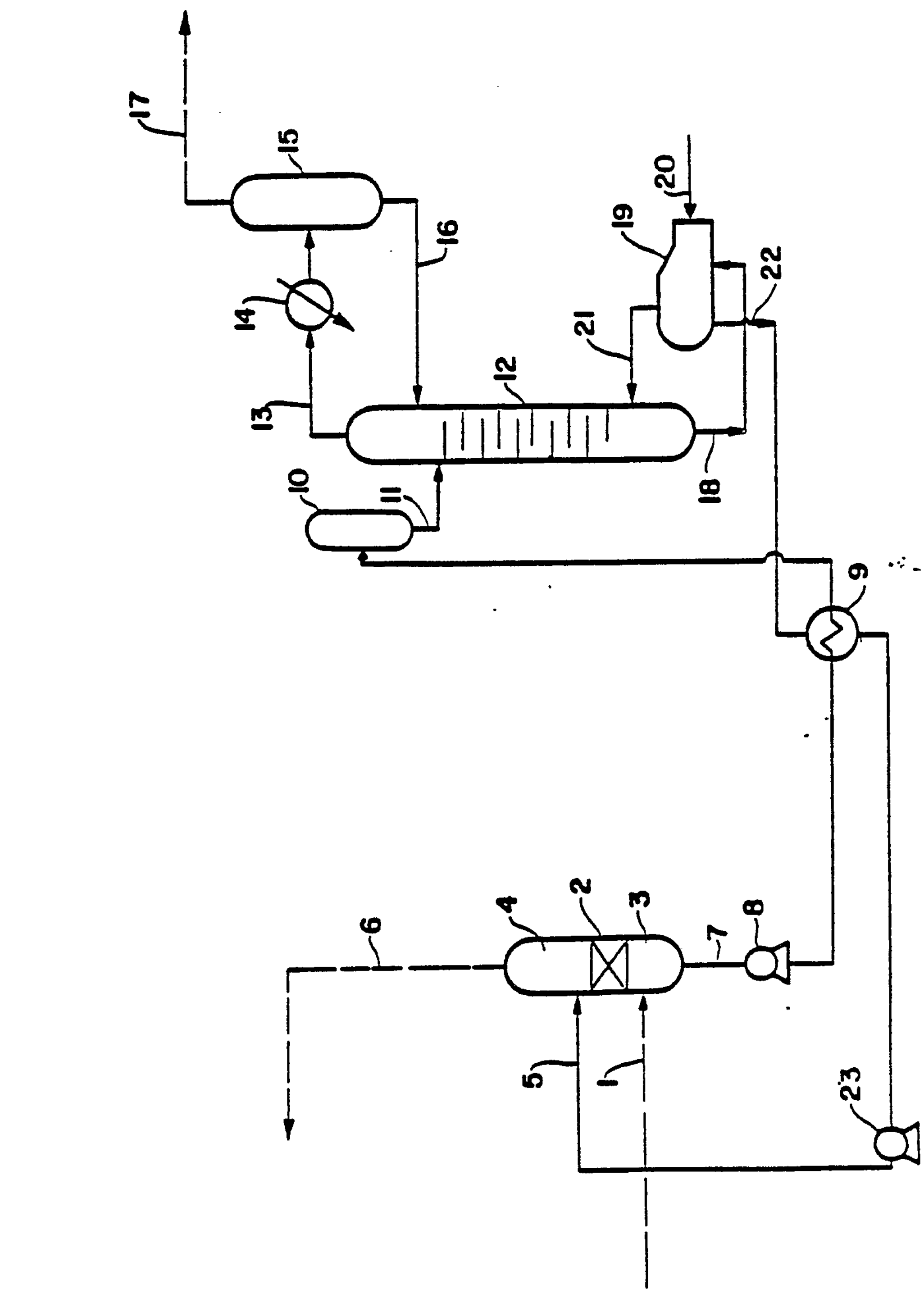


Absorption-regeneration unit for selective $H_2S$ removal

FIG. 7

$H_2S$ leak rate of Amine solutions as a function of $H_2S$ loading

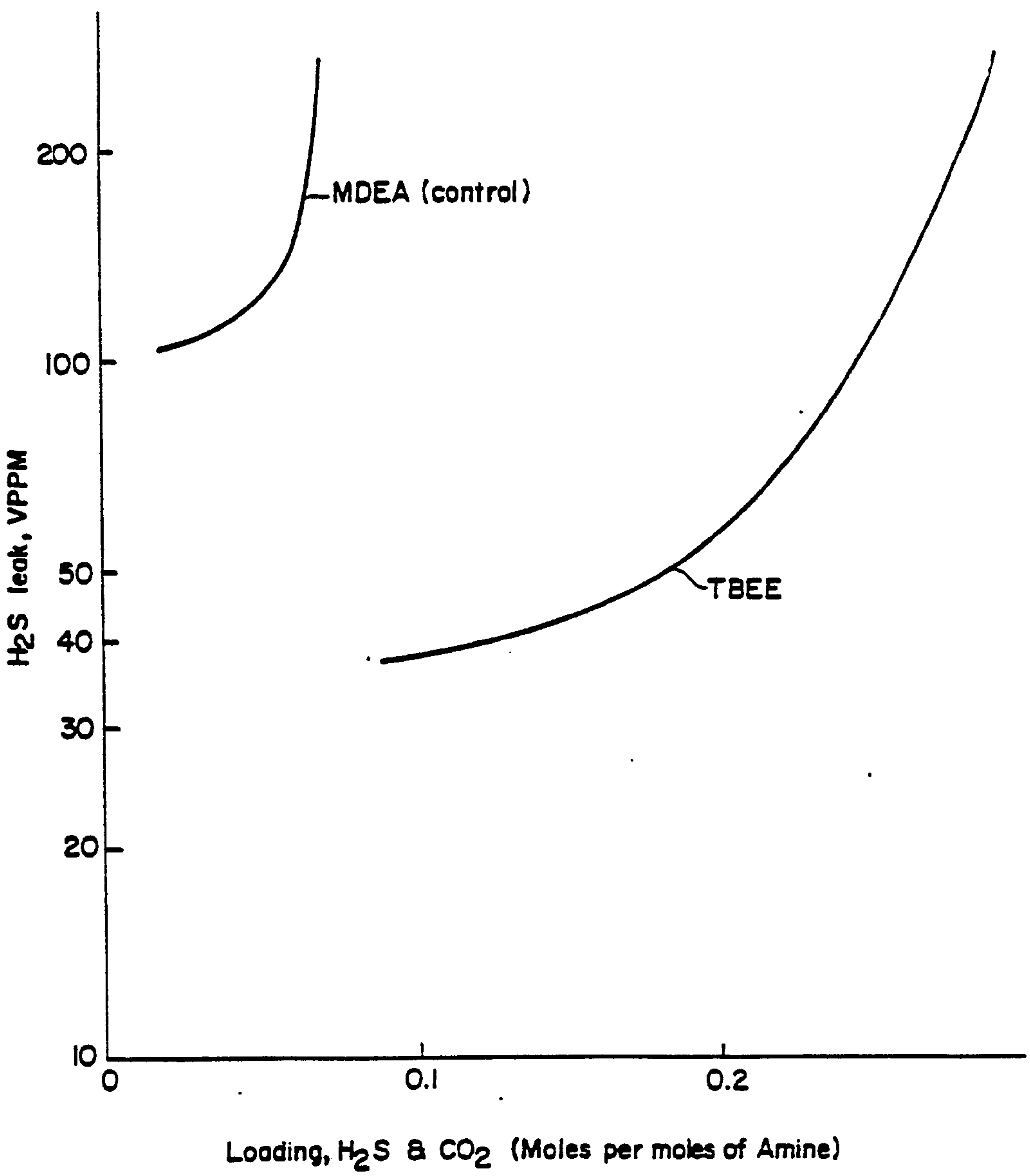


FIG. 8